# FASCICULE DE BREVET EUROPEEN

(11) **EP 1 044 064 B1**
(45) Date de publication et mention de la délivrance du brevet: **06.08.2003**
(21) Numéro de dépôt: 99900492.2
(22) Date de dépôt: 05.01.1999
(51) Int. Cl.: B01J 2/00

(54) **DISPOSITIF D'ENROBAGE POUR GRANULES A ABSORBER PAR VOIE ORALE**
VORRICHTUNG ZUR UMHÜLLUNG VON GRANULATEN ZUR ORALEN AUFNAHME
DEVICE FOR COATING GRANULES TO BE ADMINISTERED ORALLY

(30) Priorité: 06.01.1998 FR 9800048
(43) Date de publication de la demande: 18.10.2000
(73) Titulaire: LABORATOIRES DES PRODUITS ETHIQUES ETHYPHARM, 78550 Houdan (FR)
(72) Inventeur: DEBREGEAS, Patrice, F-75007 Paris (FR); LEDUC, Gérard, F-45330 Malesherbes (FR); OURY, Pascal, F-78100 Versailles (FR); ROMAIN, Patrice, F-76000 Rouen (FR)
(74) Mandataire: Ahner, Francis
(86) Numéro de dépôt international: FR9900003
(87) Numéro de publication internationale: WO99034919

(56) Documents cités:
- EP-A- 0 648 529
- FR-A- 2 130 602
- US-A- 5 376 175

## Description

L'invention concerne la réalisation de produits solides à absorber par voie orale, notamment des produits pharmaceutiques tels que des microgranules.

On connaît des médicaments à avaler, constitués par une gélule renfermant des microgranules ayant une plus grande dimension comprise par exemple entre 0,4 et 1,4 mm. Au moyen de ces microgranules, on cherche à obtenir une libération d'une substance telle qu'un principe actif dans l'organisme, régulière et prolongée dans le temps en vue de réduire le nombre de prises par le patient. La fabrication des microgranules fait intervenir une étape de montage du principe actif en solution autour de grains inertes, par exemple d'amidon. Cette étape doit permettre l'obtention sur chaque grain d'une ou plusieurs couches d'enrobage régulières, homogènes et d'épaisseur prédéterminées, constituées d'une solution comprenant le principe actif.

Un système existant permet de réaliser l'enrobage de comprimés de dimensions supérieures à 5 mm. Ceux-ci sont placés dans un tambour comprenant des perforations de diamètre inférieur à 5 mm afin d'éviter la fuite de particules tout en permettant un passage d'air au travers de la masse de comprimés à enrober. Le tambour étant en rotation, on pulvérise le liquide d'enrobage sur les comprimés. Un circuit d'air permet l'élimination des solvants et ainsi la formation continue de la couche d'enrobage.

En ce qui concerne les microgranules, ceux-ci ayant généralement un diamètre compris entre 0,4 et 1,4 mm, donc nettement inférieur à celui des comprimés, il est impossible de les placer dans ce tambour car le résultat serait une fuite immédiate des microgranules par les perforations.

Pour palier à ce problème, une solution, très difficile à mettre en oeuvre et onéreuse, consisterait en la fabrication d'un tambour ayant des perforations inférieures à 0,4 mm. De plus, le faible diamètre des ouvertures amènerait une perte de charge importante dans le circuit d'air.

Une autre solution, moins onéreuse, consiste à "doubler" l'intérieur du tambour à l'aide d'une toile métallique ou tamis ayant un maillage évitant le passage des microgranules. Dans ce cas, les contraintes sont nombreuses :
- la finesse du maillage rend la toile très fragile et apte au déchirement, ce qui entraîne la fuite des microgranules et, ainsi, la contamination du circuit d'air et du restant de l'installation ;
- le maillage est très rapidement obstrué par le dépôt de résidus d'enrobage, nécessitant des nettoyages fréquents. Le risque de colmatage nécessite alors de réduire considérablement le débit de pulvérisation de la solution d'enrobage ; et
- le nettoyage est rendu très difficile par le fait que le tamis doit être démonté. De plus, même avec un nettoyage consciencieux, il existe de nombreux risques de contamination de sorte qu'on détecte des traces d'un premier principe actif sur le produit suivant.

Un but de l'invention est de fournir un dispositif adapté à la réalisation de granules, notamment de mini ou de microgranules, facile à fabriquer, entraînant une faible perte de charge pour le circuit d'air, réduisant les risques de fuite du produit dans l'installation, réduisant les risques de contaminations croisées et permettant le montage ou l'enrobage avec un débit de substance d'enrobage ou de montage élevé.

En vue de la réalisation de ce but, on prévoit selon l'invention un dispositif pour la réalisation de granules, notamment granules pharmaceutiques, le dispositif comportant un tambour présentant des ouvertures périphériques et un organe d'alimentation du tambour en substance d'enrobage ou de montage, dans lequel le tambour comporte des profilés parallèles les uns aux autres définissant les ouvertures entre eux.

Ainsi, la largeur des ouvertures dépend de l'espacement choisi pour les profilés. Cet espacement peut être très réduit pour obtenir des ouvertures très étroites adaptées à la réalisation de microgranules ayant par exemple un diamètre compris entre 0,4 et 1,5 mm. Ce tambour est facile à fabriquer, y compris avec des ouvertures très étroites. De plus, le pourcentage de vides dans la paroi du tambour est élevé, de sorte que la perte de charge à la traversée du tambour par toute circulation d'air est réduite. Les profilés donnent à la paroi du tambour une grande solidité. Tout risque de fuite des granules dans l'installation est donc évité. Les profilés sont très faciles à nettoyer, notamment depuis l'extérieur du tambour, ce qui réduit les risques de contaminations croisées lorsque l'on monte successivement deux produits différents. Par ailleurs, les profilés entraînant peu de colmatage, on peut effectuer le montage ou l'enrobage avec un débit élevé de fluide d'enrobage ou de montage. Dès lors, lorsque les produits à monter ou à enrober sont sensibles à la chaleur ou à l'humidité, on évite les risques de dégradation des produits. Le dispositif est particulièrement bien adapté pour le montage ou l'enrobage de microgranules à usage médical comportant un principe actif dont la libération dans l'organisme doit être régulière et prolongée dans le temps.

Avantageusement, les profilés présentent des arêtes disposées en regard les unes des autres.

Ainsi, les arêtes permettent de définir les dimensions des ouvertures avec une grande précision.

Avantageusement, les arêtes délimitent une face plane de chaque profilé orientée vers l'intérieur du tambour.

Ainsi, les faces planes des profilés définissent une face plane interne du tambour, par exemple cylindrique, permettant de donner aux produits montés ou enrobés une surface très lisse.

Avantageusement, chaque profilé présente une largeur diminuant de l'intérieur vers l'extérieur du tambour.

Ainsi, le tambour est simple à nettoyer particulièrement depuis l'extérieur du tambour, les faces latérales des profilés guidant un fluide de nettoyage en direction des ouvertures entre les profilés pour le décolmatage.

Avantageusement, chaque profilé a un profil triangulaire.

Avantageusement, les profilés sont rectilignes et parallèles à un axe de rotation du tambour.

Avantageusement, les profilés sont courbes.

Avantageusement, le tambour comporte des secteurs portant les profilés et amovibles indépendamment les uns des autres.

On facilite ainsi le nettoyage du tambour.

Avantageusement, l'organe d'alimentation en substance est disposé dans le tambour.

Avantageusement, l'organe d'alimentation en substance comprend un pulvérisateur.

Avantageusement, l'organe d'alimentation en substance est relié à une source de liquide.

Avantageusement, l'organe d'alimentation en substance est relié à une source d'air comprimé.

Avantageusement, le dispositif comporte des moyens pour amener en continu un gaz à l'intérieur du tambour et pour forcer le gaz à traverser les ouvertures de l'intérieur vers l'extérieurs du tambour.

Avantageusement, le dispositif comporte des moyens pour chauffer le gaz en amont du tambour.

Avantageusement, le dispositif est agencé de sorte que le gaz traverse les ouvertures de l'extérieur vers l'intérieur du tambour.

On prévoit également selon l'invention un procédé de réalisation de granules, notamment granules pharmaceutiques, dans lequel on utilise un dispositif selon l'invention.

D'autres caractéristiques et avantages de l'invention apparaîtront dans la description suivante d'un mode préféré de réalisation donné à titre d'exemple non limitatif. Aux dessins annexés :
- la figure 1 est une vue schématique montrant la circulation des fluides dans un dispositif selon un mode préféré de réalisation de l'invention ;
- la figure 2 est une vue en perpective du tambour du dispositif de la figure 1 avec un secteur de paroi démonté ;
- la figure 3 est une vue en perspective d'une partie de la paroi du tambour de la figure 2 ;
- la figure 4 est une vue en coupe transversale selon le plan IV-IV de la paroi de la figure 3 ; et
- la figure 5 est une vue analogue à la figure 2 montrant une variante de réalisation du tambour.

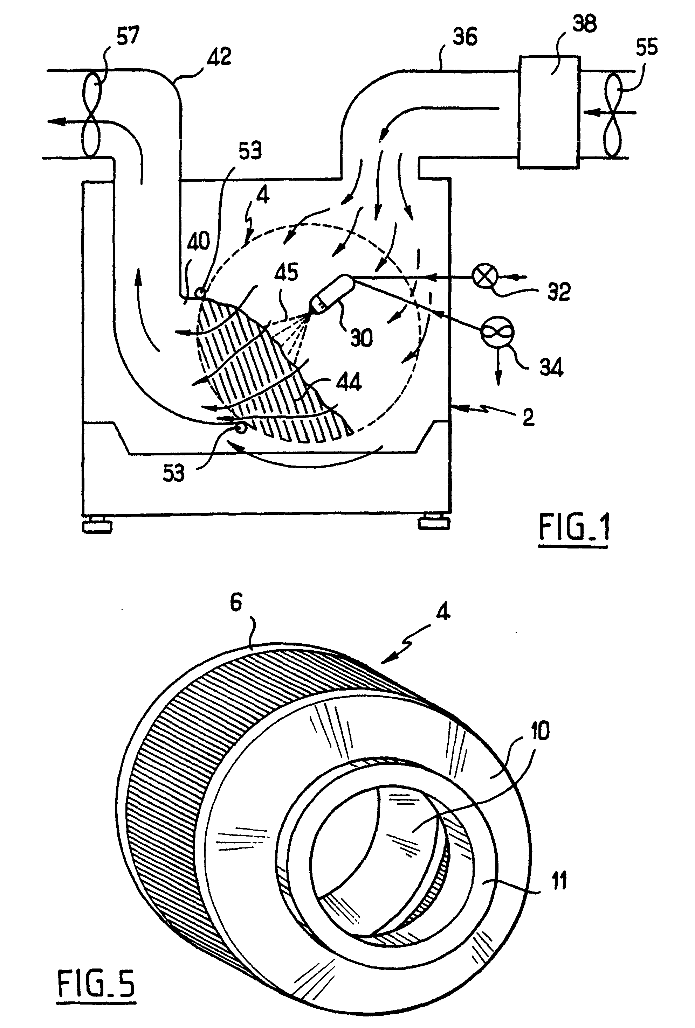

En référence à la figure 1, dans un mode préféré de réalisation, le dispositif de montage ou d'enrobage selon l'invention comprend une enceinte 2 comportant un tambour ou turbine 4.

Le tambour 4 comporte une paroi cylindrique périphérique 6 d'axe 8, et deux parois tronconiques d'extrémité 10, s'étendant à deux bords d'extrémité respectifs de la paroi cylindrique 6 et se rétrécissant à partir de ces bords. Le tambour 4 comporte deux paliers cylindriques 11 fixés aux bords les plus étroits des parois d'extrémité 10. L'un des paliers 11 est évidé, l'autre est plein. La paroi cylindrique 6 présente des évidements 12 en forme de secteurs de cylindre. Le tambour 4 comporte en outre des éléments de paroi 14 ayant une forme de secteur de cylindre complémentaire de celle des évidements 12. Chaque élément 14 comprend un cadre 16 présentant deux bords rectilignes 18 parallèles entre eux et deux bords circulaires 20, adapté à être fixé de façon amovible sur la paroi 6 pour obturer l'évidement 11 associé.

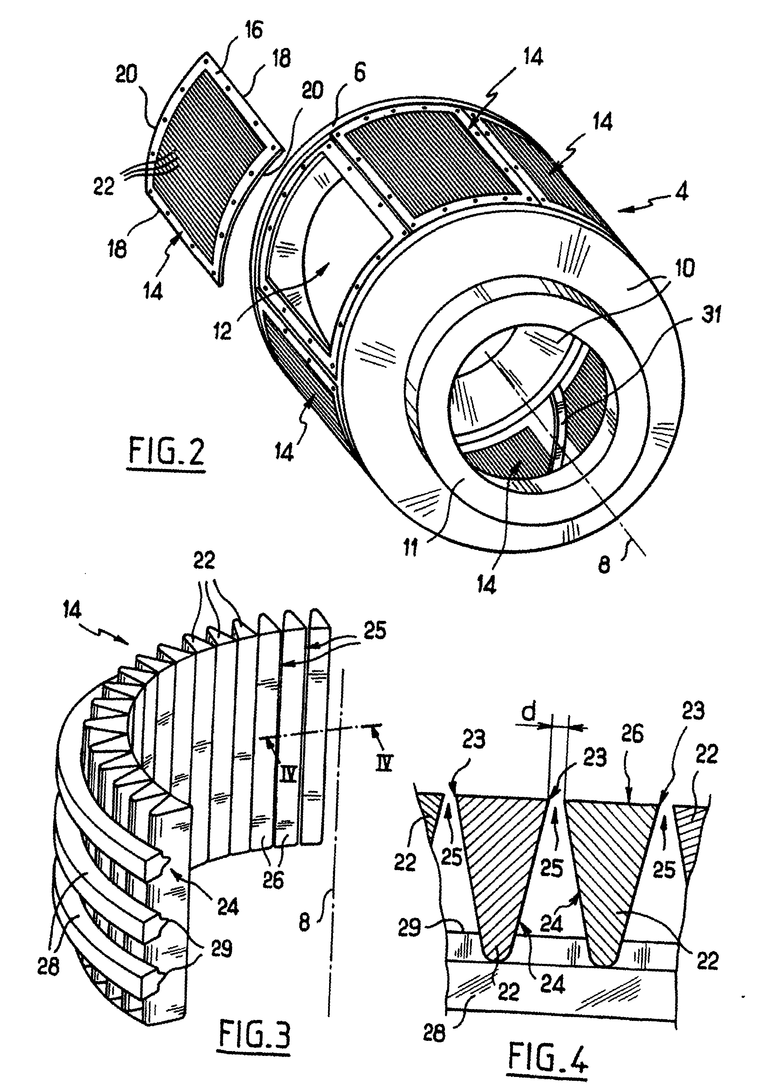

L'élément de paroi 14 comporte des profilés métalliques 22 tous identiques entre eux. Chaque profilé 22 est rectiligne et présente ici un profil général en triangle isocèle. L'angle du triangle associé aux deux côtés égaux est arrondi, alors que les deux autres angles définissent des arêtes vives 23 du profilé. Ainsi, le profilé présente deux faces latérales planes 24 identiques entre elles, contiguës à l'angle arrondi, et une face avant plane 26 opposée à cet angle, la face 26 étant délimitée par les deux arêtes vives 23, entre ces deux arêtes. Chaque profilé 22 a une largeur diminuant de l'intérieur vers l'extérieur du tambour 4. Les profilés 22 s'étendent à distance les uns des autres en regard les uns des autres, parallèlement les uns aux autres et aux bords rectilignes 18 du cadre. Les faces avant planes 26 sont sensiblement coplanaires entre elles. Elles sont disposées de façon à définir perpendiculairement aux profilés 22 une face interne cylindrique discontinue ayant une courbure identique à celle des bords courbes 20 du cadre 16. Les arêtes arrondies des profilés 22 sont toutes tournées vers l'extérieur, du côté opposé au centre de courbure. Les arêtes vives 23 des profilés 22 adjacents s'étendent parallèlement les unes aux autres, en regard et à distance les unes des autres de sorte qu'elles définissent entre elles des ouvertures 25 en forme de fentes rectilignes parallèles à l'axe 8. Les arêtes 23 ont un écartement indiqué par d sur la figure 4. Les extrémités des profilés 22 sont fixées aux bords courbes 20 du cadre 16. Avantageusement, l'élément de paroi 14 pourra comporter des supports de profilés 28 de forme plane courbe, s'étendant à distance les uns des autres dans des plans perpendiculaires à l'axe de la face cylindrique définie par les faces avant 26. Les supports 28 ont des extrémités fixées aux bords rectilignes 18 du cadre. Ils sont fixés aux profilés 22 par l'extérieur, à l'opposé des faces avant 26, au moyen d'une partie 29 à profil pointu des supports 28. Ces supports évitent la déformation des profilés rectilignes 22 et maintiennent la distance d constante sur toute la longueur des profilés.

Les éléments de paroi démontables 14 sont facilement nettoyables depuis l'extérieur. Les faces latérales 24 en regard guident un fluide de nettoyage vers les ouvertures 25 pour leur décolmatage.

Dans le dispositif 2, le tambour 4 est mobile à rotation autour de son axe 8 et est entraîné en rotation autour de cet axe par des moyens adaptés. L'enceinte 2 présente un hublot en regard de l'un des paliers 11 pour permettre l'introduction de grains 44 dans le tambour 4 à travers ce palier.

Le dispositif comporte un pulvérisateur 30 adapté à être en communication de fluide à la fois avec une source d'air comprimé 32 et une pompe de liquide 34. Ce liquide est une solution d'enrobage et comprend par exemple un solvant excipient et un principe actif dissout dans le solvant. Le pulvérisateur 30 s'étend dans le tambour 2, en regard de la face cylindrique interne, les conduits d'alimentation du pulvérisateur 30 traversant le palier 11 évidé. Le tambour 4 comporte des aubes hélicoïdales 31 fixées à la paroi interne du tambour pour accentuer la mise en rotation des grains 44 dans le tambour.

Le dispositif comporte un conduit d'alimentation en air 36 débouchant dans l'enceinte 2 et des moyens 38 s'étendant dans le conduit 36 en amont de l'enceinte 2 pour abaisser ou augmenter la température de l'air envoyé dans l'enceinte et en outre pour réguler l'humidité de cet air. Le dispositif comporte une bouche de sortie d'air 40 contiguë à la paroi cylindrique du tambour 4 et communiquant avec un conduit d'évacuation d'air 42 s'étendant hors de l'enceinte. La bouche 40 est disposée en regard d'une partie latérale inférieure du tambour 4 où s'accumulent les grains 44 lors de la rotation du tambour. Le pulvérisateur 30 est orienté pour projeter le fluide d'enrobage ou de montage 45 en direction de cette même partie du tambour. La bouche 40 comporte des joints 53 assurant l'étanchéité entre la bouche et le tambour. Le dispositif comporte, dans le conduit d'alimentation 36, un ventilateur amont 55, s'étendant en amont du tambour pour envoyer de l'air dans celui-ci, et, dans le conduit d'évacuation 42, un ventilateur aval 57, en aval du tambour, pour créer une dépression dans le tambour. Ces deux ventilateurs permettent de réguler la vitesse de l'air et la dépression dans le tambour.

Pour mettre en oeuvre le procédé de l'invention, on introduit à travers le hublot dans le tambour 4 une quantité déterminée de grains 44 à monter ou enrober ou de microgranules déjà partiellement montés ou enrobés. La distance d est choisie pour être inférieure à un plus petit diamètre de ces grains pour éviter qu'ils ne s'échappent à travers la paroi cylindrique. Ensuite, on met le tambour 4 en rotation. On met en marche le circuit d'air 36, 42 puis le pulvérisateur 30 pour l'alimentation du tambour en une solution d'enrobage comportant par exemple un principe actif. A cette fin, l'air amené par le conduit 36 traverse radialement les ouvertures 25 entre les profilés 22 pour passer de l'extérieur vers l'intérieur du tambour 4. Ensuite, l'air traverse une fraction de l'amas de grains 44 en rotation, puis entraîne le solvant à travers les ouvertures 25, radialement, cette fois de l'intérieur vers l'extérieur du tambour, à travers la bouche 40 vers le conduit d'évacuation 42. Le principe actif s'accumule progressivement sur les grains 44 tandis que le solvant est entraîné et évacué dans le conduit 42 par l'air.

Dans la variante représentée à la figure 5, le tambour 4 ne comporte pas d'élément de paroi amovible : les profilés 22 et éventuellement leurs supports 28, constituent en eux-mêmes la paroi cylindrique.

Le dispositif de l'invention pourra servir au montage ou à l'enrobage de produits à ingérer par voie orale tels que comprimés, ou microgranules destinés à être dosés et mis en gélules ou en sachets. Ces produits pourront être à usage médical, thérapeutique, cosmétique ou servir de complément alimentaire.

Bien entendu, on pourra apporter à l'invention de nombreuses modifications sans sortir du cadre de celle-ci. Les profilés définissant les ouvertures 25 entre eux pourraient être courbes et inclinés par rapport à l'axe 8 du tambour, en étant par exemple inscrits dans des plans perpendiculaires à cet axe.

Les profilés pourront avoir un profil de forme différente, par exemple trapézoïdale ou en demi-disque.

## Revendications

1. Dispositif pour la réalisation de granules, notamment granules pharmaceutiques, le dispositif comportant un tambour (4) présentant des ouvertures périphériques (25) et un organe (30) d'alimentation du tambour en substance d'enrobage ou de montage, **caractérisé en ce que** le tambour (4) comporte des profilés (22) parallèles les uns aux autres définissant les ouvertures (25) entre eux.

2. Dispositif selon la revendication 1, **caractérisé en ce que** les profilés (22) présentent des arêtes (23) disposées en regard les unes des autres.

3. Dispositif selon la revendication 2, **caractérisé en ce que** les arêtes (23) délimitent une face plane (26) de chaque profilé (22) orientée vers l'intérieur du tambour (4).

4. Dispositif selon l'une quelconque des revendications 1 à 3, **caractérisé en ce que** chaque profilé (22) présente une largeur diminuant de l'intérieur vers l'extérieur du tambour.

5. Dispositif selon l'une quelconque des revendications 1 à 4, **caractérisé en ce que** chaque profilé (22) a un profil triangulaire.

6. Dispositif selon l'une quelconque des revendications 1 à 5, **caractérisé en ce que** les profilés (22) sont rectilignes et parallèles à un axe (8) de rotation du tambour.

7. Dispositif selon l'une quelconque des revendications 1 à 5, **caractérisé en ce que** les profilés sont courbes.

8. Dispositif selon l'une quelconque des revendications 1 à 7, **caractérisé en ce que** le tambour (4) comporte des secteurs (12) portant les profilés (22) et amovibles indépendamment les uns des autres.

9. Dispositif selon l'une quelconque des revendications 1 à 8, **caractérisé en ce que** l'organe (30) d'alimentation en substance est disposé dans le tambour (4).

10. Dispositif selon l'une quelconque des revendications 1 à 9, **caractérisé en ce que** l'organe (30) d'alimentation en substance comprend un pulvérisateur.

11. Dispositif selon l'une quelconque des revendications 1 à 10, **caractérisé en ce que** l'organe (30) d'alimentation en substance est relié à une source de liquide (34).

12. Dispositif selon l'une quelconque des revendications 1 à 11, **caractérisé en ce que** l'organe (30) d'alimentation en substance est relié à une source d'air comprimé (32).

13. Dispositif selon l'une quelconque des revendications 1 à 12, **caractérisé en ce qu'**il comporte des moyens (36, 42) pour amener en continu un gaz à l'intérieur du tambour (4) et pour forcer le gaz à traverser les ouvertures (25) de l'intérieur vers l'extérieur du tambour (4).

14. Dispositif selon la revendications 13, **caractérisé en ce qu'**il comporte des moyens (38) pour modifier la température du gaz en amont du tambour (4).

15. Dispositif selon la revendication 13 ou 14, **caractérisé en ce qu'**il est agencé de sorte que le gaz traverse les ouvertures (25) de l'extérieur vers l'intérieur du tambour (4).

16. Procédé de réalisation de granules, notamment granules pharmaceutiques, **caractérisé en ce qu'**on utilise un dispositif selon l'une des revendications 1 à 15.

## Patentansprüche

1. Vorrichtung für die Herstellung von Granulatkörnern, insbesondere von pharmazeutischen Granulatkörnern, wobei die Vorrichtung eine Trommel (4), die Umfangsöffnungen (25) aufweist, und ein Organ (30) zur Einspeisung der Trommel mit einer Substanz zur Umhüllung oder zum Einfassen umfaßt, **dadurch gekennzeichnet, daß** die Trommel (4) zueinander parallele Profile (22) aufweist, die die Öffnungen (25) zwischeneinander festlegen.

2. Vorrichtung nach Anspruch 1, **dadurch gekennzeichnet, daß** die Profile (22) Kanten (23) aufweisen, die einander gegenüberliegend angeordnet sind.

3. Vorrichtung nach Anspruch 2, **dadurch gekennzeichnet, daß** die Kanten (23) eine ebene Fläche (26) eines jeden Profils (22) begrenzen, die zum Inneren der Trommel (4) orientiert ist.

4. Vorrichtung nach einem der Ansprüche 1 bis 3, **dadurch gekennzeichnet, daß** jedes Profil (22) eine Breite aufweist, die sich vom Inneren zum Äußeren der Trommel verringert.

5. Vorrichtung nach einem der Ansprüche 1 bis 4, **dadurch gekennzeichnet, daß** jedes Profil (22) ein dreieckiges Profil aufweist.

6. Vorrichtung nach einem der Ansprüche 1 bis 5, **dadurch gekennzeichnet, daß** die Profile (22) geradlinig und zu einer Drehachse (8) der Trommel parallel sind.

7. Vorrichtung nach einem der Ansprüche 1 bis 5, **dadurch gekennzeichnet, daß** die Profile gekrümmt sind.

8. Vorrichtung nach einem der Ansprüche 1 bis 7, **dadurch gekennzeichnet, daß** die Trommel (4) Sektoren (12) aufweist, die die Profile (22) tragen und unabhängig voneinander abnehmbar sind.

9. Vorrichtung nach einem der Ansprüche 1 bis 8, **dadurch gekennzeichnet, daß** das Einspeisungsorgan (30) für Substanz in der Trommel (4) angeordnet ist.

10. Vorrichtung nach einem der Ansprüche 1 bis 9, **dadurch gekennzeichnet, daß** das Einspeisungsorgan (30) für Substanz einen Zerstäuber aufweist.

11. Vorrichtung nach einem der Ansprüche 1 bis 10, **dadurch gekennzeichnet, daß** das Einspeisungsorgan (30) für Substanz mit einer Flüssigkeitsquelle (34) verbunden ist.

12. Vorrichtung nach einem der Ansprüche 1 bis 11, **dadurch gekennzeichnet, daß** das Einspeisungsorgan (30) für Substanz mit einer Druckluftquelle (32) verbunden ist.

13. Vorrichtung nach einem der Ansprüche 1 bis 12, **dadurch gekennzeichnet, daß** sie Mittel (36, 42) aufweist, um ständig Gas dem Inneren der Trommel (4) zuzuführen, und um das Gas zu zwingen, die Öffnungen (25) vom Inneren zum Äußeren der Trommel (4) zu durchqueren.

14. Vorrichtung nach Anspruch 13, **dadurch gekennzeichnet, daß** sie Mittel (38) aufweist, um stromaufwärts der Trommel (4) die Temperatur des Gases zu ändern.

15. Vorrichtung nach Anspruch 13 oder 14, **dadurch gekennzeichnet, daß** sie derart eingerichtet ist, daß das Gas die Öffnungen (25) vom Äußeren zum Inneren der Trommel (4) durchquert.

16. Verfahren zur Herstellung von Granulatkörnern, besonders von pharmazeutischen Granulatkörnern, **dadurch gekennzeichnet, daß** man eine Vorrichtung nach einem der Ansprüche 1 bis 15 verwendet.

## Claims

1. Device for the production of granules, in particular pharmaceutical granules, the device having a drum (4) with peripheral apertures (25) and a member (30) for feeding the drum with coating or fixing substance, **characterized in that** the drum (4) has mutually parallel sections (22) which define between them the apertures (25).

2. Device according to Claim 1, **characterized in that** the sections (22) have edges (23) arranged opposite one another.

3. Device according to Claim 2, **characterized in that** the edges (23) delimit a flat face (26) of each section (22), the said face facing the inside of the drum (4).

4. Device according to any of Claims 1 to 3, **characterized in that** each section (22) has a width which decreases from the inside towards the outside of the drum.

5. Device according to any of Claims 1 to 4, **characterized in that** each section (22) has a triangular profile.

6. Device according to any of Claims 1 to 5, **characterized in that** the sections (22) are rectilinear and parallel to an axis (8) of rotation of the drum.

7. Device according to any of Claims 1 to 5, **characterized in that** the sections are curved.

8. Device according to any of Claims 1 to 7, **characterized in that** the drum (4) has sectors (12) which carry the sections (22) and can be removed independently of one another.

9. Device according to any of Claims 1 to 8, **characterized in that** the substance feed member (30) is arranged in the drum (4).

10. Device according to any of Claims 1 to 9, **characterized in that** the substance feed member (30) comprises an atomizer.

11. Device according to any of Claims 1 to 10, **characterized in that** the substance feed member (30) is connected to a source of liquid (34).

12. Device according to any of Claims 1 to 11, **characterized in that** the substance feed member (30) is connected to a source of compressed air (32).

13. Device according to any of Claims 1 to 12, **characterized in that** it has means (36, 42) for the continuous supply of a gas to the interior of the drum (4) and for forcing the gas to pass through the apertures (25) from the inside towards the outside of the drum (4).

14. Device according to Claims 13, **characterized in that** it has means (38) for modifying the temperature of the gas upstream of the drum (4).

15. Device according to Claim 13 or 14, **characterized in that** it is set up such that the gas passes through the apertures (25) from the outside towards the inside of the drum (4).

16. Process for producing granules, in particular pharmaceutical granules, **characterized in that** use is made of a device according to one of Claims 1 to 15.
